# EUROPEAN PATENT APPLICATION

(11) **EP 3 444 507 A1**
(43) Date of publication of application: **20.02.2019**
(21) Application number: 16896147.2
(22) Date of filing: 04.05.2016
(51) Int. Cl.: F16K 1/18, F16K 1/20, F16K 31/53

(54) **VENTILATION VALVE**

(30) Priority: 31.03.2016 CN 201610200092
(71) Applicant: E3 Green Technology Co., Ltd., Shanghai 201203 (CN)
(72) Inventor: TANG, Guangye, Naperville, Illinois 60564 (US); RUAN, Hongzheng, Shanghai 201200 (CN)
(74) Representative: Inspicos P/S
(86) International application number: PCT/CN2016/080990
(87) International publication number: WO 2017/166369

(57) **Abstract**

A ventilation valve, comprising a cylindrical valve body (1), a gear box(2), a plurality of fan-shaped vanes(3) and a drive device(4), the gear box(2) being arranged in the center of the valve body(1), and a geared mechanism being provided inside the gear box(2). The drive device(4), by means of a geared drive mechanism, cause the vanes(3) to rotate in a same direction, each around its own central shaft; the vanes(3) are arranged within the valve body(1) in a uniform distribution; the geared mechanism comprises a first central gear(23) and a second central gear(24) fitted on a same supporting shaft(25); between the first central gear(23) and the second central gear(24) are provided a plurality of gears, one each of which is arranged at the end of one of said central shafts which extends to within the gear box(2), each of said gears engaging with both said first central gear(23) and said second central gear(24). Also arranged within the valve body(1) is one or a plurality of airflow meters(6), the distance between the central axis of each of said one or plurality of airflow meters(6) and the central axis of the valve body (1) is different. The present ventilation valve precisely controls airflow and is safe and reliable, while featuring improved geared mechanism security and reduced wear and tear, thus prolongs the service life of the ventilation valve.

## Description

### TECHNICAL FIELD

The present invention relates to a ventilation valve.

### BACKGROUND ARTS

The ventilation valve is a type of regulation valve with a simple structure and wide application. It can be used as a control device to control or shutoff gas flow rates, which can be applied to ventilation and environmental protection projects across various industries such as chemical industry, building materials, power stations, etc.

In the prior art, most of the ventilation valves use a geared mechanism inside the valve to control the rotation of the vanes. However, since the structure of the geared mechanisms are relatively simple in the prior art, vibrations easily occur during the operation of the motor, if the vibration amplitude is large, gear misalignment or jamming may easily occur between the gears, which not only causes damage to the gears but also the motor, thus shortening the service life of the ventilation valve and generates loud noise pollution.

### SUMMARY OF THE INVENTION

In order to solve the problems described above, one objective of the present invention aims to provide a ventilation valve, comprising a cylindrical valve body, a gear box, a plurality of fan-shaped vanes and a drive device, wherein a sealing device is provided on the inner surface of the valve body, the gear box is arranged at the center of the valve body, and a geared mechanism is provided inside the gear box; the drive device drives the geared mechanism so as to drive the vanes to rotate in the same direction about their respective central axis; the vanes are uniformly arranged in the valve body, and one end of each vane is combined with the outer wall of the gear box; wherein the geared mechanism includes a first central gear and a second central gear fitted on the same support shaft, a plurality of gears are provided between the first central gear and the second central gear and fitted at one end of each of the central shafts extending into the gear box, each of the gears are simultaneously engaged with the first central gear and the second central gear; one or a plurality of airflow meters are further arranged within the valve body, the distances of the axis of the one or a plurality of airflow meters to the axis of the valve body can be different.

The aforementioned ventilation valve is safe and reliable, can control airflow with precision, improves the security of the geared mechanism, effectively reduces usage wear and tear, and prolongs the service life of the ventilation valve.

Preferably, the ventilation valve is also arranged with a control device.

Further, first central gear and second central gear are respectively connected with the support shaft through the bearings.

Preferably, a support tube fitted on the support shaft is arranged between the bearings, and the two ends of the support tube are respectively abutted with the first central gear and second central gear.

Further, one of the plurality of vanes is an active vane, the drive device is connected with the central shaft of the active vane.

Preferably, the gears are bevel gears.

Further, the first central gear and second central gear both have disc structures, and one side of each of the first central gear and second central gear that meshes with the bevel gear is provided with teeth that mesh with the bevel gear.

Preferably, one or more reinforcing ribs are provided at the bottom of valve body.

Further, a fixing portion is provided at the center of the one or more reinforcing ribs for fixing the gear box.

Further, a first positioning portion is arranged on the said fixing portion, and a second positioning portion corresponding to said first positioning portion is arranged at a corresponding position on the upper box body or the lower box body of the gear box.

As above, the present invention achieves a small external size, a safe and reliable structure, which effectively increases the reliability and stability of the gears, and prolongs the service life of the ventilation valve.

### BRIEF DESCRIPTION OF THE DRAWINGS

Fig.1 is a schematic structural illustration of the ventilation valve according to the present invention;
Fig.2 is a top view of Fig.1;
Fig.3 is a schematic structural illustration of vanes of the ventilation valve upon fully opened;
Fig.4 is a schematic structural illustration of the vanes 3;
Fig.5 is a schematic structural illustration of the gear box 2 and the geared mechanism;
Fig.6 is a schematic structural illustration of the bottom of the valve body 1 in Fig.1.

### Description of the reference number

1 valve body
2 gear box
21 upper box body
22 lower box body
23 first central gear
24 second central gear
25 support shaft
3 vanes
31 central shaft
32 bevel gear
33 lateral side
34 front side
4 drive device
5 reinforcing rib
51 reinforcing portion
52 fixing portion
6 airflow meter

### DETAILED DESCRIPTION OF THE INVENTION

The following are specific embodiments of the implementation of the present invention, those skilled in the art can easily understand other advantages and effects of the present invention from the contents disclosed in this specification. Although the present invention will be described in combination with the preferred embodiment, it is important to note that the features of this invention are not limited to the preferred embodiment. On the contrary, the purpose of presenting the present invention in combination with the preferred embodiments is to cover other alternatives or modifications that may be derived from the claims of the present invention. The following description will include abundant specific details to facilitate a deeper understanding of the present invention. The present invention may also be implemented without using these details. In addition, some specific details will be omitted in the description so as to avoid confusion and missing the key points of the present invention.

In addition, the terms "up", "down", "left", "right", "top" and "bottom" used in the following description should not be construed as limiting the present invention.

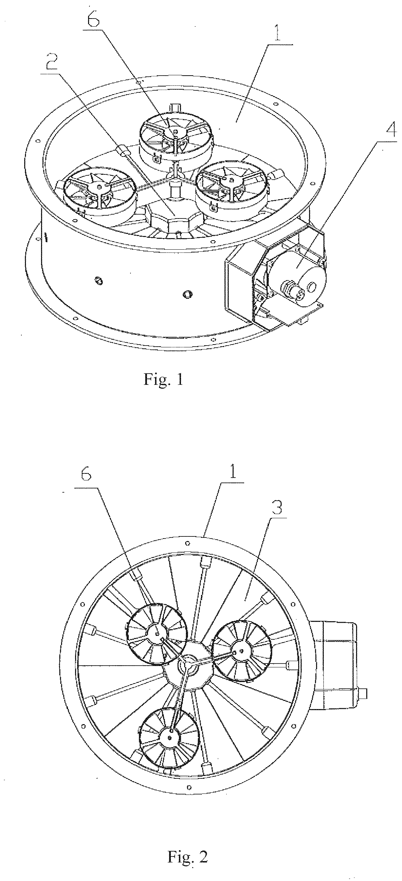

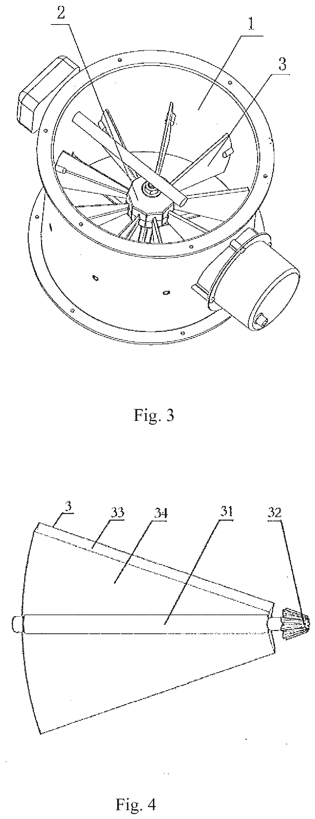

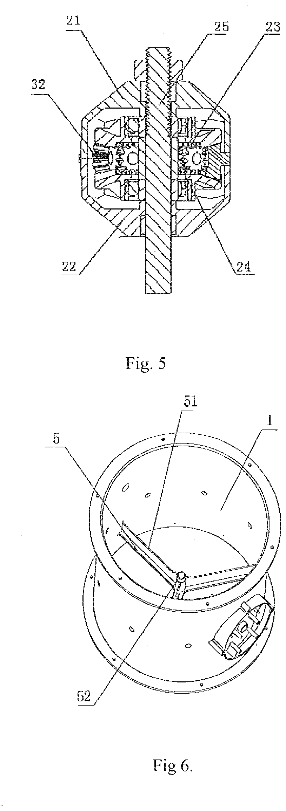

As shown in Fig.1 to Fig. 6, the present invention provides a ventilation valve, the ventilation valve comprising a cylindrical valve body 1, a gear box 2, a plurality of fan-shaped vanes 3 and a drive device 4.

In one aspect of the present invention, a plurality of vanes 3 are uniformly arranged in valve body 1, the central shafts 31 are arranged in the middle of the vanes 3, and the vanes 3 can rotate around the central shafts 31; one end of the central shaft 31 is rotatably connected with the valve body 1, and the other end of the central shaft 31 extends into the gear box 2 and is rotatable relative to the gear box 2; one end of the vanes 3 is combined with the outer wall of the gear box 2, that is, when the ventilation valve is closed, one end of the vanes 3 is closely fitted with the outer wall of the gear box 2 to achieve good sealing performance; a sealing device is provided on the inner surface of the valve body 1, the ventilation valve can be sealed by the sealing device after the ventilation valve is closed to ensure that the ventilation valve has better sealing performance which prevents wind or airflow outside the ventilation valve from flowing into the interior of the ventilation valve.

Further, in the present invention, a stepped portion is preferably provided on the inner surface of the valve body 1 as a sealing device. When the ventilation valve is closed, the vanes 3 are fitted with the stepped portions to achieve the sealing performance of the ventilation valve.

As shown in Fig. 1 to Fig. 2, in the present invention, in order to better measure the air volume of the ventilation valve, one or a plurality of airflow meters 6 are further arranged within the valve body 1, and the distances of the axis of one or a plurality of airflow meters 6 to the axis of the valve body 1 are different to facilitate measurement of air volumes flowing through the ventilation valve at different rotation radii.

In the present invention, three airflow meters 6 are preferably used to monitor the air volume of the ventilation valve, and the distances of the axis of three airflow meters 6 to the axis of the valve body 1 are not the same. Further, more than three airflow meters 6 may be arranged in the valve body 1 based on actual needs to better monitor the air volume of the ventilation valve. Further, in the present invention, a control device is also arranged within the ventilation valve. The control device can be used to record and process the monitoring data of the airflow meters 6, compares the monitoring date with the preset value of the air volume, and corrects the air volume of the ventilation valve, that is, the driving force of the drive device, according to the difference between the monitoring data and the preset value of the air volume after obtaining the difference, and adjusting the air volume of the ventilation valve by adjusting the opening angle of the vanes 3, so that the air volume of the ventilation valve can be accurately controlled, and the opening angle of the ventilation valve can be corrected by the preset value of the air volume and the monitoring value of the airflow meters 6.

Further, the control device may be provided on the valve body 1 of the ventilation valve, or may be integrated with the controls portion of any equipment installed and using the ventilation valve, which can further reduce the outside dimension, or space requirement of the ventilation valve.

In one aspect of the present invention, the gear box 2 can be arranged in the center of the valve body 1 as shown in Fig. 1, and a geared mechanism is provided inside the gear box 2. The gear box 2 prevents dust or other foreign matter from falling into the geared mechanism to prevent wear and tear of the geared mechanism, thus prolonging the service life of the gear and preventing the user from being accidentally injured by the gear during use.

Further, in the present invention, the geared mechanism includes a first central gear 23 and a second central gear 24 fitted on the same support shaft 25, wherein the support shaft 25 is located at the center of the gear box 2, a plurality of gears are provided between the first central gear 23 and the second central gear 24 and fitted at one end of each of the central shafts 31 extending into the gear box 2, each of the gears are simultaneously engaged with the first central gear 23 and the second central gear 24. The gear is arranged between the first central gear 23 and the second central gear 24 that can effectively increase the structural stability of the geared mechanism, so that the ventilation valve can be smoothly opened or closed during operation to prevent any dangers due to vibrations of the ventilation valve during its operation.

Further, in the aspect of the present invention shown in Fig. 1, a support shaft 25 is provided in the middle of the gear box 2 to further increase the strength and durability of the ventilation valve with additional support. The support shaft 25 may pass through the middle portion of the first central gear 23 and the second central gear 24, and an upper box body 21 and a lower box body 22 are connected through the support shaft 25 and fixed by nuts.

In the present invention, the first central gear 23 and the second central gear 24 are connected with the supported shaft 25 by the bearings. That is, the first central gear 23 is connected with the support shaft 25 by the first bearing, and the second central gear 24 is connected with the support shaft 25 by the second bearing. To further improve the structural stability of the geared mechanism, a support tube preferably fitted on the support shaft 25 is arranged between the first bearing and the second bearing, and the two ends of the support tube are respectively abutted with the first bearing and the second bearing. In this way, the structural stability of the geared mechanism can be further increased, and wobbling of the vanes 3 can be prevented.

Further, in the present invention, the gear box 2 includes the upper box body 21 and the lower box body 22, and the upper box body 21 and the lower box body 22 can be snap-fitted to each other for ease of installation and maintenance. In the specific implementation, the shapes of the upper box body 21 and the lower box body 22 may be changed according to specific usage needs or space requirements. In one aspect of the present invention, both the upper box body 21 and the lower box body 22 are preferably tapered to further reduce the outside dimension of the gear box 2.

In another aspect of the present invention, the ventilation valve is also provided with a drive device 4. The drive device 4 drives the first central gear 23 or the second central gear 24 so as to drive the vanes 3 to rotate in the same direction around their respective central axis. Further, it is preferable to use a motor as the drive device 4 for the ventilation valve. The forward and reverse rotation of the motor can drive the vanes 3 to rotate counterclockwise or clockwise so as to realize the opening or closing functions of the ventilation valve.

Further, when the drive device 4 drives the vanes 3 and the front side 34 of the vanes 3 is rotated to be perpendicular to the axis of the valve body 1, the ventilation valve is completely closed, and the lateral sides 33 of the two adjacent blades are closely fitted with each other, and the angle between the lateral side 33 of one vane 3 and the front side 34 of one vane 3 is less than 90° , the angle between the lateral side 33 of the other vane 3 and the front side 34 of the other vane 3 is greater than 90°, and when the ventilation valve is in a completely closed state, the other end of the vanes 3 is combined with the sealing device. In one aspect of the present invention, the lateral side 33 of the vanes 3 is not perpendicular to the front side 34 of the vanes 3, and when the ventilation valve is completely closed, the lateral sides 33 of the adjacent two vanes 3 can be closely fitted with each other, thereby reducing the probability of the wind or airflow entering from the adjacent two vanes 3, enhancing the sealing performance between the vanes 3, and improving the sealing performance of the ventilation valve.

Further, in the present invention, in order to better control the opening or closing of the vanes 3, a control device can also be used to control the motor, such as controlling the forward or reverse rotation of the motor or the torque of the forward or reverse rotation of the motor so as to control the opening or closing sizes of the vanes 3, or control the time of opening or closing of the vanes 3.

In one aspect of the present invention, a plurality of vanes 3 are arranged in the valve body 1, and effectively reduces the outside dimension of the vanes 3. That is, when the ventilation valve is in a full open state, the height of the vanes 3 when the front side 34 of the vanes 3 is rotated to be parallel to the axis of the valve body 1 can be reduced, thus effectively reducing the overall height of the valve, so that the ventilation valve can be used in a wider application and can be installed and used in much tighter spaces. Further, when a plurality of vanes 3 are adopted, the pressure on each vane 3 is reduced accordingly, and the torque required for rotation of the vanes 3 is reduced accordingly, so that the required driving force output from the drive device 4 is effectively reduced, and the torque of the drive device 4 is decreased. Thus, the service life of the drive device 4 is greatly prolonged. In addition, providing a plurality of vanes 3 in the valve body 1 can also divert the wind or airflow into the ventilation valve when the ventilation valve is in an open and operational state, thereby reducing the wind resistance and greatly reducing the noise level of the ventilation valve when airflow passes through.

Further, in another aspect of the present invention, each vane 3 is fan-shaped, and any number of vanes 3 may be used as needed. The middle portion of each vane 3 is provided with a central shaft 31, and the vane 3 can rotate around the central shaft 31. In the present invention, in order to increase the strength and durability of the vanes 3, the vanes 3 and the central shafts 31 are preferably of integrated structure. That is, the vanes 3 and the central shafts 31 are integrally formed during the production process, and the strength and durability of the vanes 3 is effectively improved. Further, the thickness of the vanes 3 is preferably 3 to 5 mm, and furthermore, in some embodiments of the present invention, the thickness of the vanes 3 is preferably 3.5 to 4 mm.

Even further, the vanes 3 is preferably made of a non-metal material such as polyethylene material (PE), polyvinyl chloride material (PVC), polypropylene material (PP), etc., but the present invention is not limited thereto, and various other materials may also be used as a material for the vanes 3.

In another aspect of the present invention, the drive device 4 may be provided outside the valve body 1, or may be provided inside the gear box 2 depending on usage requirements. When the drive device 4 is provided outside the valve body 1, one of the plurality of vanes 3 may be provided as an active vane 3, the drive device 4 is connected with the central shaft 31 of the active vane 3. When the drive device 4 drives the active vane 3, the active vane 3 rotates to drive the central gear meshing with the gear arranged at the end of the central shaft 31 of the active vane 3 in the gear box 2, so as to drive other gears which meshes with the central gear, thereby enabling all the vanes 3 to rotate in the same direction as the active vane 3.

When the drive device 4 is arranged in the gear box 2, the drive device 4 is primarily used to drive and rotate the first central gear 23 or the second central gear 24. When the first central gear 23 or the second central gear 24 rotates, it drives each gear meshed therewith as well as the first central gear 23 or the second central gear 24 to rotate so that the vanes 3 are driven to rotate. Further, in one aspect of the present invention, the gears arranged at the ends of the central shafts 31 of the vanes 3 are preferably bevel gears 32, and the first central gear 23 and the second central gear 24 are all disc structures, one side of the first central gear 23 and the second central gear 24 that meshes with the bevel gear 32 is provided with teeth that mesh with the bevel gear 32. By providing the gears arranged at the ends of the central shafts 31 of the vanes 3 as the bevel gear 32, the meshing area between the gears can be increased without increasing the outside dimension of the gear box 2, and the gear transmission can be made more efficient.

In order to increase the strength and durability of the ventilation valve, one or more reinforcing ribs 5 are provided at the bottom of the valve body 1. In some embodiments of the present invention, preferably, three reinforcing ribs 5 are provided at the bottom of the valve body 1, which increases the strength and durability of the valve body 1 without reducing the flow of wind or air.

Further, in order to increase the strength and durability of the reinforcing ribs 5, it is preferable to provide a reinforcing portion 51 on each reinforcing rib 5, and the reinforcing portion 51 can be provided in various heights depending on practical usage requirements. In some embodiments of the present invention, the height of the reinforcing portion 51 is preferably 13 mm.

Further, in one aspect of the present invention, a fixing portion 52 for fixing the gear box 2 is arranged at the center of one or more reinforcing ribs 5. In some embodiments of the present invention, the height of the fixing portion 52 is preferably 3 mm to match the height of the reinforcing portion 51 on the reinforcing rib 5. At the same time, a first positioning portion is arranged on the fixing portion 52, and a second positioning portion corresponding to the positioning portion is arranged at a corresponding position on the upper box body 21 or the lower box body 22 of the gear box 2, so as to facilitate the installation of the gear box 2. In some embodiments of the present invention, it is preferable to perform mutual positioning by means of a single trimming on the fixing portion 52 and the gear box 2 to facilitate convenience of installation.

In a specific implementation, the motor is started first. The motor drives the active vane 3, and the bevel gear 32 on the central shaft 31 of the active vane 3 drives the central shaft 31 to rotate, so as to rotate the bevel gear 32 on the central shaft 31 of the remaining vanes 3. Finally, all the vanes 3 rotate in the same direction so that the ventilation valve is open and operational. When ventilation needs are met, the motor is started again, so that the motor is reversely rotated. The motor drives the active vane 3, and the bevel gear 32 on the central shaft 31 of the active vane 3 drives the central shaft 31 to rotate in the reverse direction, so as to rotate the bevel gear 32 on the central shaft 31 of the remaining vanes 3. Finally, all the vanes 3 rotate in the reverse direction so that the ventilation valve is completely closed. The torque of the motor can also be controlled according to practical use, so that the vanes 3 are opened or closed at a certain angle to realize the function of controlling the ventilation airflow volume.

Further, the ventilation valve can also be driven manually to facilitate the adjustment of ventilation airflow.

In summary, the ventilation valve structure of the present invention is safe and reliable, and is relatively stable without vibrations during operation, thus it is worthy of extensive application and promotion.

The above-described embodiments merely illustrate the principles of the present invention and its effects, rather than limiting the invention. Any person skilled in the art can modify or change the above embodiments without departing from the spirit and scope of the present invention. Therefore, all equivalent modifications or changes made by a person of ordinary skill in the art without departing from the spirit and technical thought disclosed in the present invention should still be covered by the claims of the present invention.

## Claims

1. A ventilation valve, comprising a cylindrical valve body, a gear box, a plurality of fan-shaped vanes and a drive device, a sealing device is provided on the inner face of said valve body, the gear box is arranged in the center of said valve body, and a geared mechanism is provided inside said gear box; said drive device drives said geared mechanism to drive the vanes to rotate in the same direction around respective central axis; the vanes are uniformly arranged in said valve body, and one end of said vanes is combined with the outer wall of said gear box; wherein said geared mechanism includes a first central gear and a second central gear sleeved on the same support shaft, a plurality of gears are disposed between said first central gear and said second central gear and disposed at an end of each of the central shafts extending into said gear box, each of the gears meshes with said first central gear and said second central gear at the same time;
one or a plurality of air flow meters is further arranged within said valve body, and the distances of the axis of said one or a plurality of air flow meters to the axis of said valve body are not equal.

2. The ventilation valve according to claim 1, wherein said ventilation valve is also arranged with a control device.

3. The ventilation valve according to claim 1, wherein said first central gear and said second central gear are respectively connected with said support shaft through the first bearing and the second bearing.

4. The ventilation valve according to claim 3, wherein a support tube sleeved on the support shaft is arranged between said first bearing and said second bearing, and the two ends of said support tube are respectively abutted with said first bearing and said second bearing.

5. The ventilation valve according to claim 1, wherein one of a plurality of vanes is an active vane, said drive device is connected with the central shaft of said active vane.

6. The ventilation valve according to claim 1, wherein said gears are bevel gears.

7. The ventilation valve according to claim 3, wherein said first central gear and said second central gear both have disc structures, and one side of said first central gear and said second central gear that meshes with said bevel gears is provided with teeth that mesh with said bevel gear.

8. The ventilation valve according to claim 1, wherein one or more reinforcing ribs are provided at the bottom of said valve body.

9. The ventilation valve according to claim 8, wherein the center of one or more reinforcing ribs is provided with a fixing portion for fixing said gear box.

10. The ventilation valve according to claim 9, wherein a first positioning portion is arranged on said fixing portion, and a second positioning portion corresponding to said positioning portion is arranged at a corresponding position on an upper box body or a lower box body of said gear box.

## Amended claims

### Amended claims under Art. 19.1 PCT

1. A ventilation valve, comprising a cylindrical valve body, a gear box, a plurality of fan-shaped vanes and a drive device, a sealing device is provided on the inner surface of said valve body, the gear box is arranged in the center of said valve body, and a geared mechanism is provided inside said gear box; said drive device drives said geared mechanism to drive the vanes to rotate in the same direction around respective central axis; the vanes are uniformly arranged in said valve body, and one end of said vanes is combined with the outer wall of said gear box; wherein said geared mechanism includes a first central gear and a second central gear fitted on the same support shaft, a plurality of gears are provided between said first central gear and said second central gear and fitted at one end of each of the central shafts extending into said gear box, each of the gears are simultaneously engaged with said first central gear and said second central gear; one or a plurality of air flow meters are further arranged within said valve body, and when a plurality of airflow meters are arranged in said valve body, the distances of the axis of said plurality of airflow meters to the axis of said valve body are different to facilitate measurement of air volumes flowing through the ventilation valve at different rotation radii.

2. The ventilation valve according to claim 1, wherein said ventilation valve is also arranged with a control device.

3. The ventilation valve according to claim 1, wherein said first central gear and said second central gear are respectively connected with said support shaft through the first bearing and the second bearing.

4. The ventilation valve according to claim 3, wherein a support tube sleeved on the support shaft is arranged between said first bearing and said second bearing, and the two ends of said support tube are respectively abutted with said first bearing and said second bearing.

5. The ventilation valve according to claim 1, wherein one of a plurality of vanes is an active vane, said drive device is connected with the central shaft of said active vane.

6. The ventilation valve according to claim 1, wherein said gears are bevel gears.

7. The ventilation valve according to claim 3, wherein said first central gear and said second central gear both have disc structures, and one side of said first central gear and said second central gear that meshes with said bevel gears is provided with teeth that mesh with said bevel gear.

8. The ventilation valve according to claim 1, wherein one or more reinforcing ribs are provided at the bottom of said valve body.

9. The ventilation valve according to claim 8, wherein the center of one or more reinforcing ribs is provided with a fixing portion for fixing said gear box.

10. The ventilation valve according to claim 9, wherein a first positioning portion is arranged on said fixing portion, and a second positioning portion corresponding to said positioning portion is arranged at a corresponding position on an upper box body or a lower box body of said gear box.
